Europäisches Patentamt

European Patent Office

Office européen des brevets

(19)

(11) EP 0 557 197 B1

(12) FASCICULE DE BREVET EUROPEEN

(45) Date de publication et mention
de la délivrance du brevet:
**14.10.1998 Bulletin 1998/42**

(51) Int Cl.⁶: **G06F 13/16**

(21) Numéro de dépôt: **93400411.0**

(22) Date de dépôt: **18.02.1993**

(54) **Système de partage de temps d'accès à une mémoire partagée entre un processeur et d'autres applications**

Zugriffszeitteilungssystem auf einen Speicher, der einem Prozessor und anderen Anwendungen gemeinsam ist

Access time sharing system to a memory shared by a processor and other applications

(84) Etats contractants désignés:
**AT BE DE ES FR GB IT**

(30) Priorité: **19.02.1992 FR 9201881**

(43) Date de publication de la demande:
**25.08.1993 Bulletin 1993/34**

(73) Titulaire: **ALCATEL ALSTHOM COMPAGNIE GENERALE D'ELECTRICITE**
**75008 Paris (FR)**

(72) Inventeurs:
• **Rinie, Hubert**
**F-67240 Gries (FR)**
• **Douhet, Gérard**
**F-67640 Fegersheim (FR)**

(74) Mandataire:
**Pothet, Jean Rémy Emile Ludovic et al**
**ALCATEL ALSTHOM,**
**Département de Propriété Industrielle,**
**30, avenue Kléber**
**75116 Paris (FR)**

(56) Documents cités:
**EP-A- 24 288**          **EP-A- 94 042**
**AT-B- 389 014**         **GB-A- 2 011 681**

• **PATENT ABSTRACTS OF JAPAN vol. 12, no. 6 (P-653)9 Janvier 1988 & JP-A-62 165 263 ( FUJITSU LTD ) 21 Juillet 1987**

## Description

Le domaine de l'invention est celui des systèmes permettant de partager les temps d'accès à une mémoire entre une pluralité d'applications.

Il est fréquent de devoir partager une mémoire entre des applications différentes. Cette mémoire est par exemple une mémoire vive (RAM) dans laquelle chaque application vient lire et/ou écrire des données. Une de ces applications est généralement constituée par un processeur communiquant habituellement avec la mémoire vive à travers un bus d'adresse et un bus de données. Lorsque d'autres applications doivent également pouvoir accéder à cette mémoire vive, il est nécessaire de prévoir des dispositions permettant ces accès.

De façon connue, le partage d'une mémoire vive est habituellement effectué par accès direct à cette mémoire. La mémoire vive constitue de ce fait une mémoire partagée. Ce processus, également appelé DMA (Direct Memory Access), permet notamment à une autre application que le processeur, généralement constitué par un microprocesseur, d'accéder très rapidement à la mémoire partagée sans que soient nécessités des cycles d'instructions du microprocesseur permettant un tel accès (lecture ou écriture de données).

On connaît différents types d'accès direct mémoire.

Un premier type d'accès direct mémoire consiste à suspendre le fonctionnement du microprocesseur par une instruction HALT, mettant les sorties des bus d'adresses et de données du microprocesseur en état haute impédance. Ces bus peuvent alors être utilisés par une autre application pour accéder à la mémoire partagée.

Cependant, cette méthode implique un ralentissement du fonctionnement du microprocesseur et n'est de ce fait pas adaptée aux systèmes requérant à la fois une importante vitesse de traitement des données et un transfert rapide de données entre cette application et la mémoire partagée.

Un second type d'accès direct mémoire est basé sur le vol de cycles. Le fonctionnement du microprocesseur est suspendu pendant un cycle d'horloge pendant lequel l'application accède à la mémoire partagée.

Cette méthode entraîne donc également un ralentissement du fonctionnement du microprocesseur.

Un troisième type d'accès direct mémoire consiste à multiplexer temporellement l'accès à la mémoire partagée entre le microprocesseur et l'application. Ce multiplexage temporel est réalisé en employant une mémoire partagée dont le temps de cycle est égal à une fraction du temps d'activation du microprocesseur. Par exemple, si le temps d'accès à la mémoire partagée est égal à 560 ns, l'horloge du microprocesseur est réglée à 1,2 µs de telle sorte qu'une autre application puisse également accéder toutes les 1,2 µs à la mémoire partagée. Ce mode de réalisation permet d'effectuer des accès à la mémoire partagée sans modifier le fonctionnement du microprocesseur, les accès de l'application à la mémoire étant transparents pour ce dernier.

Cependant, lorsque les accès à la mémoire partagée doivent pouvoir être effectués à haut débit et que le microprocesseur doit également pouvoir traiter des données à sa fréquence de fonctionnement maximale, imposée par un quartz, il n'est pas toujours possible de diminuer cette vitesse de fonctionnement. Cette méthode revient donc à ralentir le fonctionnement du microprocesseur pour permettre des accès à la mémoire partagée.

On se référera par exemple à la demande de brevet GB-2.011.681 qui décrit un système de partage de temps d'accès à une mémoire partagée entre une application et un processeur, ce système nécessitant un ralentissement du fonctionnement du processeur lors des accès de l'application à la mémoire partagée.

En conclusion, les processus d'accès direct mémoire existants impliquent tous la suspension du traitement des données par le microprocesseur, ou alors un ralentissement de ce traitement, pour permettre un échange de données entre une application et la mémoire partagée.

On connaît également, par le brevet autrichien n°389.014, un système de commande d'une machine de photocomposition. Ce système met en oeuvre un microprocesseur, une mémoire statique utilisée comme mémoire de programme et une mémoire dynamique fonctionnant comme mémoire de données et recevant du texte introduit à partir d'un clavier. Le rafraîchissement des données de la mémoire dynamique est assuré par un circuit de réactivation qui est activé lorsque le microprocesseur accède à la mémoire statique. De cette manière, les périodes d'accès du microprocesseur à la mémoire statique sont utilisées pour réactiver la mémoire dynamique.

Ce document ne décrit cependant pas un accès à une mémoire devant pouvoir être effectué par deux applications, le microprocesseur constituant l'une de ces applications.

La présente invention a notamment pour objectif de pallier ces inconvénients.

Plus précisément, un des objectifs de l'invention est de fournir un système de partage de temps d'accès à une mémoire commune pour au moins deux applications, le microprocesseur constituant une de ces applications, ces transferts d'accès direct mémoire étant réalisés sans ralentir le fonctionnement du microprocesseur.

Cet objectif, ainsi que d'autres qui apparaîtront par la suite, est atteint grâce à un système conforme à la revendication 1.

Le système de l'invention permet ainsi à une application d'accéder à la mémoire partagée pendant que le processeur accède à sa mémoire de code. Le fonctionnement du processeur n'est de ce fait pas ralenti et le transfert de données entre l'application et la mémoire partagée est transparent pour le processeur.

Selon un mode de réalisation préférentiel de l'invention, le processeur est constitué par un microcontrôleur comprenant le générateur du signal d'accès à la mémoire de code.

Avantageusement, le signal d'accès à la mémoire de code est du type PSEN généré par un microcontrôleur de la famille 8031 d'INTEL (marque déposée).

Selon un autre mode de réalisation, le processeur est constitué par un microprocesseur et le signal d'accès à la mémoire de code est constitué par un signal de type "Chip Select" généré par un décodeur d'adresses externe au microprocesseur et constituant le générateur du signal d'accès à la mémoire de code.

Le système de l'invention est donc applicable à tout type de microprocesseur.

Préférentiellement, le gestionnaire d'accès comprend des drivers tri-state réalisant la commutation.

Une mémoire tampon est avantageusement insérée entre l'application et le gestionnaire d'accès pour réaliser une fonction d'adaptation de débit.

D'autres caractéristiques et avantages apparaîtront à la lecture de la description suivante d'un mode de réalisation préférentiel de l'invention, donné à titre illustratif et non limitatif, et des dessins annexés dans lesquels:

- la figure 1 est un bloc diagramme d'un système de transfert de données mettant en oeuvre un processeur et une application se partageant une mémoire commune, selon un mode de réalisation préférentiel de l'invention;
- la figure 2 est un chronogramme représentant le partage temporel de l'accès à la mémoire partagée entre le processeur et l'application de la figure 1, ce processeur étant constitué par un microcontrôleur de la famille 8031 d'INTEL (marque déposée);
- la figure 3 est un chronogramme montrant deux accès successifs à la mémoire partagée, effectués pendant un accès unique du processeur à sa mémoire morte.

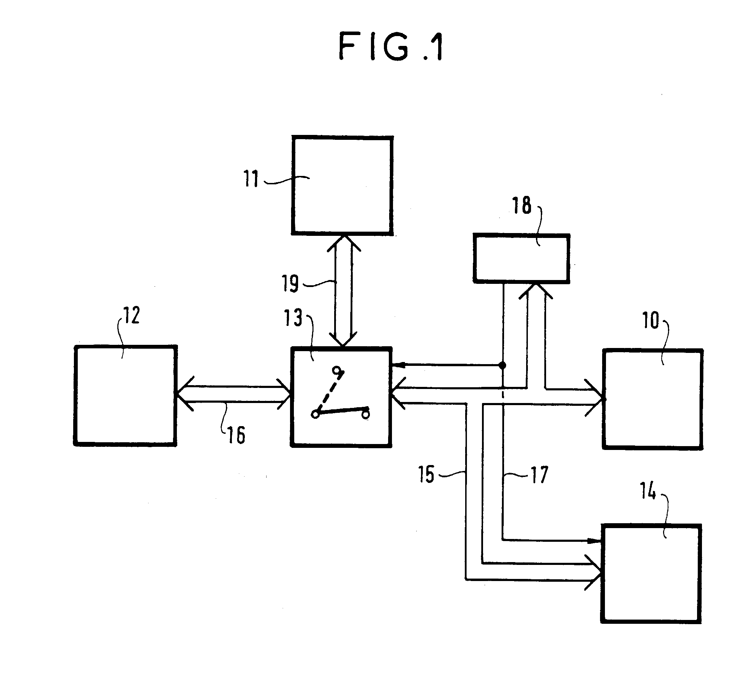

La figure 1 est un bloc diagramme d'un mode de réalisation préférentiel de l'invention où un processeur et une autre application se partagent une mémoire commune, ci-après appelée mémoire partagée.

L'invention repose sur l'exploitation du principe que, pendant que le processeur accède à sa mémoire de code, typiquement constituée par une mémoire morte (ROM), la mémoire partagée (RAM) n'est pas utilisée par ce processeur. Il est donc possible à une autre application, pendant ces temps d'accès à la mémoire ROM par le processeur, d'adresser la mémoire RAM pour y lire et/ou écrire des données.

La figure 1 montre un processeur 10 raccordé par un premier bus 15 d'adresses et de données à une mémoire de code 14 (ROM). Ce bus véhicule également des signaux de commande de type Read et Write. La mémoire de code 14 est une mémoire morte et comporte des instructions de programme. Le processeur 10 accède à cette mémoire morte 14 pour y lire ses instructions et les exécuter. Le premier bus 15 est également connecté à un port d'un gestionnaire d'accès 13 pour pouvoir accéder à une mémoire partagée 12.

Le système comprend également une application 11 qui doit pouvoir accéder à la mémoire partagée 12. Elle comprend pour cela un bus 19 d'adresses, de données et de signaux de contrôle, constituant un deuxième bus du système, connecté à un autre port du gestionnaire d'accès 13. Le gestionnaire d'accès 13 se comporte comme un commutateur de bus, c'est à dire qu'il permet à l'application 11 d'accéder à la mémoire partagée 12 lorsque le processeur 10 accède à sa mémoire morte 14. La mémoire partagée 12 est raccordée pour cela à un troisième port constituant un "point commun" du commutateur ainsi constitué par un troisième bus 16. Un accès du processeur 10 à la mémoire morte 14 est détecté par la génération d'un signal d'accès à la ROM, véhiculé sur une liaison de commande 17. Ce signal est appliqué à la fois au gestionnaire d'accès 13 et à la ROM 14.

Le signal d'accès à la ROM est par exemple un niveau logique constituant un signal de sélection (Chip Select) destiné à la mémoire ROM 14. Ce signal est alors issu de moyens 18 de décodage d'adresse, constituant des moyens de génération du signal d'accès à la ROM par le processeur, connectés en parallèle sur le bus d'adresses du processeur 10, constitué par un microprocesseur, et passe à l'état actif dès que le microprocesseur 10 accède à la ROM 14.

Selon un autre mode de réalisation, le signal de sélection est un signal de type PSEN généré directement par le processeur 10. Le processeur est alors un microcontrôleur et les moyens de décodage 18 sont inutiles. Les signaux de type PSEN sont propres aux microcontrôleurs de la famille 8031 d'INTEL (marque déposée), microcontrôleurs 8 bits, et signalent un accès du microcontrôleur 10 au code contenu dans la ROM 14. Ce signal PSEN agit de la même manière qu'un signal de sélection de la ROM 14, c'est à dire qu'il est équivalent à un signal "Chip Select".

Lorsqu'un tel accès à la ROM 14 est effectué par le processeur 10, le gestionnaire d'accès 13 reçoit le signal d'accès à la ROM 14 véhiculé sur la liaison de commande 17. Le gestionnaire d'accès 13 effectue alors une commutation de ses ports, de façon à connecter le troisième bus 16 d'adresses et de données au deuxième bus 19 d'adresse et de données, comme représenté en traits discontinus. L'application 11, par exemple constituée par un autre processeur (microprocesseur ou microcontrôleur), peut alors accéder à la mémoire partagée 12 pour y écrire et/ou lire des données. Le gestionnaire d'accès 13 assure également une commutation des signaux de contrôle (Read et Write) en provenance du microcontrôleur vers la mémoire RAM, lorsque le microcontrôleur n'accède pas à son code, et gère les signaux d'échange entre l'application 11 et la RAM lorsque le microcontrôleur accède à son code. L'application 11 voit alors le gestionnaire d'accès 13 comme une mémoire et peut effectuer un accès direct mémoire. Lorsque le processeur 10 a terminé son accès à la ROM 14, le signal d'accès à la ROM disparaît et le gestionnaire d'accès 13 rétablit la liaison entre le premier bus 15 et le troisième bus 16, de telle sorte que le processeur 10 puisse accéder à la mémoire partagée 12.

Le gestionnaire d'accès 13 assurant l'aiguillage des adresses, des données et la gestion des signaux de contrôle est par exemple constitué par des drivers tristate bidirectionnels pour les données et monodirectionnels pour les adresses et les signaux de contrôle. Le sens de circulation des données est déterminé par les signaux de lecture et d'écriture générés par l'application et le processeur. Il est ainsi possible au processeur 10 et à l'application 11 à la fois de lire et d'écrire dans la mémoire partagée 12. Bien entendu, ce mode de réalisation n'est donné qu'à titre indicatif et d'autres modes de réalisation sont possibles.

Comme l'accès à la mémoire partagée 12 est effectué par l'application 11 pendant que le processeur 10 accède à son code mémorisé dans la ROM 14, le fonctionnement du processeur 10 n'est pas ralenti.

Le processeur 10 effectue obligatoirement un certain nombre d'accès à son code et ces périodes d'accès sont exploitées dans la présente invention puisque la RAM n'est pas utilisée. Le déroulement du programme mémorisé dans la ROM autorise donc nécessairement la mise en oeuvre de l'invention. Cependant, lorsque les instructions mémorisées dans la mémoire de code 14 nécessitent de fréquents accès du processeur 10 à la mémoire partagée 12, le débit de données pouvant être transférées entre l'application 11 et cette mémoire partagée 12 s'en trouve affecté.

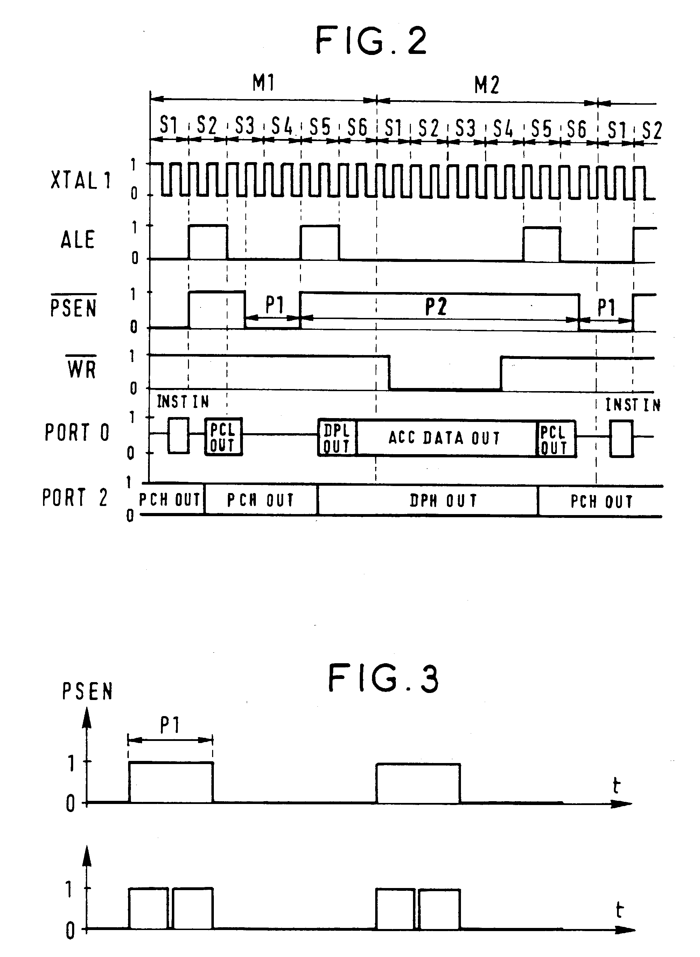

La figure 2 est un chronogramme représentant le partage temporel de l'accès à la mémoire partagée 12 entre le processeur 10 et l'application 11 pour une instruction de programme nécessitant un temps d'accès du processeur 10 à la mémoire partagée 12 de valeur importante.

Ce chronogramme correspond à l'exécution d'une instruction MOVX @DPTR,A par un microcontrôleur 80C154 de la famille 80C31 d'INTEL (marque déposée). Comme il sera décrit par la suite, cette instruction de programme est l'une des plus défavorables pour la mise en oeuvre de l'invention. Elle fait en effet intervenir un temps maximal entre deux signaux PSEN consécutifs et c'est donc en se basant sur ce type d'instruction que l'on pourra déterminer le débit minimal garanti pour le transfert de données entre l'application et la mémoire RAM partagée. Lors de l'exécution de cette instruction, le microcontrôleur transfère les données de l'accumulateur A vers la mémoire partagée à l'adresse contenue dans un registre DPTR 16 bits interne au microcontrôleur. Cette opération consiste donc à écrire une donnée en mémoire partagée et nécessite deux cycles M1,M2 processeur constitués chacun de six sous-temps S1 à S6. Le signal XTAL1 est celui généré par le quartz et chaque sous-temps nécessite deux périodes d'horloge.

Le microcontrôleur comporte deux ports PORT 0 et PORT 2 et les adresses et données sont démultiplexées sur ces deux ports. PORT 0 est réservé aux adresses basses (A0-A7) et aux données (D0-D7) et PORT 2 aux adresses hautes (A8-A15). Le microcontrôleur génère un premier signal PSEN à partir de la deuxième période du sous-temps S3 jusqu'à la fin du sous-temps S4, correspondant à une période P1. Ensuite, ce signal d'accès à la mémoire de code est inactivé pendant une période P2 avant d'être à nouveau présent pendant une nouvelle période P1. La période P2 correspond à l'écart maximal entre deux signaux PSEN.

L'exécution de cette instruction nécessite donc un temps d'accès important du microcontrôleur 10 à la mémoire partagée 12 (période P2). En conséquence, afin de connaître le débit minimal de données pouvant être transmises entre l'application 11 et la mémoire partagée 12, il faut se placer dans le cas où toutes les instructions comprises dans la mémoire ROM 14 seraient de ce type. Dans ce cas de figure le plus défavorable, on considère ensuite la fréquence du quartz pilotant le microprocesseur pour en déduire la durée du signal PSEN. Par exemple, si la fréquence d'oscillation du quartz est de 16 MHz, la durée du signal PSEN est de:

$$P1 = 3 \times \frac{1}{16.10^6} = 187 \text{ ns}$$

A cette période P1, il est nécessaire de soustraire des temps fixes dus aux étages logiques du système ainsi constitué, pour obtenir le temps d'accès maximal dont dispose l'application 11 pour accéder à la mémoire partagée 12. Si l'application 11 peut réaliser un accès à chaque période P1, le débit minimal de transfert de données est alors égal à $\frac{1}{P1+P2}$.

A titre d'exemple, pour une fréquence de fonctionnement de 16 MHz du microcontrôleur, compte tenu des temps de transition dus aux étages logiques, une mémoire partagée statique présentant un temps d'accès de l'ordre de 85 ns permet d'effectuer un transfert de données entre la RAM et l'application 11. Un tel temps d'accès permet l'utilisation d'une RAM de vitesse moyenne. Bien entendu, si la RAM présente des temps d'accès plus courts, et/ou si la fréquence de fonctionnement du processeur est inférieure à 16 MHz, l'application 11 peut réaliser plusieurs accès à la mémoire partagée pendant un accès unique du processeur à sa mémoire morte.

La figure 3 est un chronogramme montrant deux accès successifs à la mémoire partagée par l'application 11, effectués pendant un accès unique d'un microcontrôleur à sa mémoire morte.

Les chronogrammes sont représentés en logique positive. Lorsque le microcontrôleur accède à la mémoire morte (premier chronogramme), il génère le signal PSEN. Deux accès successifs à la mémoire partagée sont alors effectués (deuxième chronogramme), pendant la durée d'activation du signal PSEN, par l'application 11. Cette opération se répète à chaque activation du signal PSEN. La durée du signal PSEN est notée P1 et le nombre d'accès à la mémoire partagée par l'application 11 pendant la durée P1 est noté M. Dans cette figure M=2. Le débit maximal de données, en octets, entre la mémoire partagée et l'application 11 est égal à M.N/T où T est une période de référence pendant laquelle le microcontrôleur accède N fois à la mémoire de code (ROM). Le nombre N est déterminé, pour une fréquence de fonctionnement du processeur donnée, par une suite d'instructions nécessitant chacune un temps d'accès du processeur à la mémoire partagée maximal, du type MOVX @DPTR,A pour un microcontrôleur 8031 d'INTEL (marque protégée).

L'accès de l'application 11 à la mémoire partagée 12 peut s'effectuer par l'intermédiaire d'une mémoire tampon insérée entre le gestionnaire d'accès 13 et l'application 11. On réalise ainsi une adaptation de temps d'accès.

Le fonctionnement de l'application est totalement asynchrone par rapport à celui du processeur puisque les accès à la mémoire partagée sont permis à l'application en fonction du contenu du logiciel contenu dans la mémoire ROM. Il est également possible de synchroniser les échanges de données entre le processeur et l'application en associant des drapeaux aux données de la mémoire partagée.

Il est également possible de partager les données mémorisées dans la mémoire commune, c'est à dire laisser à une ou plusieurs applications le soin de traiter une partie ou la totalité des données comprises dans la mémoire commune. L'ensemble ou une partie du traitement est alors sous-traité et le microprocesseur peut effectuer d'autres tâches de traitement.

Un autre avantage de l'invention est que du point de vue du logiciel mémorisé dans la mémoire morte, l'utilisation partagée de la RAM est totalement transparente si la RAM est partagée en deux champs mémoire différents. Le boîtier RAM peut donc être unique. On peut illustrer cet avantage par l'exemple suivant:

Soit un système comprenant un microcontrôleur et une mémoire de code associée. L'exécution du programme nécessite 18 Koctets de mémoire RAM et le microcontrôleur ne peut être ralenti dans son exécution. Une application de transmission de données nécessite 10 Koctets de RAM, par exemple pour réaliser une fonction de décalage de données. La solution classique consiste à associer un boîtier RAM de 32 Koctets (taille de boîtier directement supérieure à 18 Koctets) au microprocesseur et un boîtier RAM de 32 Koctets à la fonction de transmission des données. En appliquant le principe de l'invention, un seul boîtier RAM de 32 Koctets est suffisant. On diminue ainsi la taille de la mémoire, le coût et la consommation du système.

Il est bien entendu possible de permettre un accès à la mémoire partagée à plusieurs applications différentes. Un gestionnaire de priorité est alors inséré entre le gestionnaire d'accès 13 et les différentes applications. Ce gestionnaire de priorité peut par exemple affecter à une première application un premier temps d'accès pendant la durée P1, un second temps d'accès pendant cette même durée P1 étant réservé à une seconde application. D'autres modes de réalisation sont possibles, notamment l'établissement d'une priorité tournante entre les différentes applications.

## Revendications

1. Système de partage de temps d'accès à une mémoire partagée (12) entre au moins une application (11) et un processeur (10), ledit processeur (10) coopérant, par l'intermédiaire d'un premier bus (15), avec une mémoire de code (14) comprenant des instructions de programme devant être exécutées par ledit processeur (10), ledit processeur (10) coopérant également avec ladite mémoire partagée (12) pour y lire et/ou écrire des données, un signal d'accès à ladite mémoire de code (14) étant généré par ledit processeur (10) ou par des moyens de génération coopérant avec ledit processeur (10) lorsque ledit processeur (10) accède à ladite mémoire de code (14), ladite application (11) devant également pouvoir accéder à ladite mémoire partagée (12) pour y lire et/ou écrire des données par l'intermédiaire d'un deuxième bus (19), le système de partage de temps d'accès comprenant un gestionnaire d'accès (13) placé entre d'une part lesdits premier (15) et deuxième (19) bus et d'autre part un troisième bus (16) relié à ladite mémoire partagée (12), ledit gestionnaire d'accès (13) effectuant une commutation dudit deuxième bus (19) sur ledit troisième bus (16) lorsque ledit signal d'accès est présent, de façon à permettre à ladite application (11) d'accéder à ladite mémoire partagée (12), et une commutation dudit premier bus (15) sur ledit troisième bus (16) lorsque ledit signal d'accès est absent, de façon à permettre audit processeur (10) d'accéder à ladite mémoire partagée (12) caractérisé en ce que lorsque le processeur (10) a terminé son accès à ladite mémoire de code (14), le signal d'accès à ladite mémoire de code disparait et le gestionnaire d'accès (13) rétablit la liaison entre le premier bus (15) et le troisième bus (16).

2. Système selon la revendication 1, caractérisé en ce que ledit processeur (10) est constitué par un microcontrôleur comprenant ledit générateur dudit signal d'accès à la mémoire de code.

3. Système selon la revendication 2, caractérisé en ce que ledit signal d'accès à la mémoire de code est du type PSEN généré par un microcontrôleur (10) de la famille 8031 d'INTEL (marque déposée).

4. Système selon la revendication 1, caractérisé en ce que ledit processeur (10) est constitué par un microprocesseur et en ce que ledit signal d'accès à la mémoire de code est constitué par un signal de type "Chip Select" généré par un décodeur d'adresses (18) externe audit microprocesseur (10) et constituant ledit générateur dudit signal d'accès à la mémoire de code.

5. Système selon l'une des revendications 1 à 4, caractérisé en ce que ledit gestionnaire d'accès (13) comprend des drivers tri-state réalisant ladite commutation.

6. Système selon l'une des revendications 1 à 5, caractérisé en ce qu'une mémoire tampon est insérée entre ladite application (11) et ledit gestionnaire d'accès (13) pour réaliser une fonction d'adaptation de débit.


**Patentansprüche**

1. System zum Teilen der Zugriffszeit auf einen geteilten Speicher (12) zwischen wenigstens einer Anwendung (11) und einem Prozessor (10), wobei der Prozessor (10) über einen ersten Bus (15) mit einem Codespeicher (14) zusammenwirkt, der Programmbefehle enthält, die von dem Prozessor (10) ausgeführt werden müssen, wobei der Prozessor (10) ferner mit dem geteilten Speicher (12) zusammenwirkt, um dort Daten zu lesen und/oder zu schreiben, wobei ein Zugriffssignal auf den Codespeicher (14) von dem Prozessor (10) oder von Erzeugungsmitteln, die mit dem Prozessor (10) zusammenwirken, erzeugt wird, wenn der Prozessor (10) auf den Codespeicher (14) zugreift, wobei die Anwendung (11) ebenfalls auf den geteilten Speicher (12) zugreifen können muß, um dort Daten über einen zweiten Bus (19) zu lesen und/oder zu schreiben, wobei das System zum Teilen der Zugriffszeit eine Zugriffsverwaltung (13) umfaßt, die zwischen den ersten (15) und zweiten (19) Bus einerseits und einem dritten Bus (16) andererseits angeordnet ist, der mit dem geteilten Speicher (12) verbunden ist, wobei die Zugriffsverwaltung (13) eine Umschaltung des zweiten Busses (19) an den dritten Bus (16) ausführt, wenn das Zugriffssignal vorhanden ist, um es der Anwendung (11) zu ermöglichen, auf den geteilten Speicher (12) zuzugreifen, und eine Umschaltung vom ersten Bus (15) auf den dritten Bus (16) ausführt, wenn das Zugriffssignal nicht vorhanden ist, um dem Prozessor (10) zu ermöglichen, auf den geteilten Speicher (12) zuzugreifen, **dadurch gekennzeichnet,** daß wenn der Prozessor (10) seinen Zugriff auf den Codespeicher (14) beendet hat, das Zugriffssignal auf den Codespeicher verschwindet und die Zugriffsverwaltung (13) die Verbindung zwischen dem ersten Bus (15) und dem dritten Bus (16) wieder herstellt.

2. System nach Anspruch 1, dadurch gekennzeichnet, daß der Prozessor (10) durch einen Mikrocontroller gebildet ist, der den Generator des Codespeicher-Zugriffssignals umfaßt.

3. System nach Anspruch 2, dadurch gekennzeichnet, daß das Codespeicher-Zugriffssignal vom Typ PSEN ist, erzeugt von einem Mikrocontroller (10) der 8031-Familie von INTEL (eingetragenes Warenzeichen).

4. System nach Anspruch 1, dadurch gekennzeichnet, daß der Prozessor (10) durch einen Mikroprozessor gebildet ist, und daß das codespeicher-Zugriffssignal durch ein Signal vom Typ "Chip Select" gebildet ist, das von einem Adressdecoder (18) außerhalb des Mikroprozessors (10) erzeugt wird, der den Generator des Codespeicher-Zugriffssignals bildet.

5. System nach einem der Ansprüche 1 bis 4, dadurch gekennzeichnet, daß die Zugriffsverwaltung Drei-Zustands-Treiber umfaßt, die die Umschaltung bewerkstelligen.

6. System nach einem der Ansprüche 1 bis 5, dadurch gekennzeichnet, daß ein Pufferspeicher zwischen die Anwendung (11) und die Zugriffsverwaltung (13) eingefügt ist, um eine Ratenanpassungsfunktion zu bewerkstelligen.


**Claims**

1. A memory access time sharing system for accessing a shared memory (12) which is shared between a processor (10) and at least one application (11), said processor (10) co-operating with a code memory (14) via a first bus (13), which code memory contains program instructions to be carried out by said processor (10), said processor (10) also co-operating with said shared memory (12) to read data therefrom and/or to write data therein, a code memory access signal for accessing said code memory (14) being generated by said processor (10) or by generating means co-operating with said processor (10) when said processor (10) accesses said code memory (14), said application (11) also being able to access said shared memory (12) to read data therefrom and/or to write data therein via a second bus (19), said memory access time sharing system including an access manager (13) placed between firstly said first bus (15) and said second bus (19) and secondly a third bus (16) connected to said shared memory (12), said access manager (13) switching said second bus (19) over to said third bus (16) when said access signal is present so as to enable said application (11) to access said shared memory (12), and switching said first bus (15) over to said third bus (16) when said access signal is absent, so as to enable said processor (10) to access said shared memory (12), said memory access time sharing system being characterized in that once the processor (10) has finished accessing said code memory (14), the code memory access signal disappears and the access manager (13) re-establishes the link between the first bus (15) and the third bus (16).

2. A system according to claim 1, characterized in that said processor (10) is constituted by a microcontroller comprising said generator for generating said code memory access signal.

3. A system according to claim 2, characterized in that said code memory access signal is of the PSEN type generated by a microcontroller (10) of the INTEL (registered trademark) 8031 family.

4. A system according to claim 1, characterized in that said processor (10) is constituted by a microprocessor, and in that said code memory access signal is constituted by a chip select type signal generated by an address decoder (18) outside said microprocessor (10) and constituting said generator for generating said code memory access signal.

5. A system according to any one of claims 1 to 4, characterized in that said access manager (13) comprises 3-state drivers performing said switching.

6. A system according to any one of claims 1 to 5, characterized in that a buffer memory is inserted between said application (11) and said access manager (13) in order to perform a data-rate matching function.

# FIG.1

# FIG.2

# FIG.3